# EUROPEAN PATENT APPLICATION

(11) **EP 1 941 994 A1**
(43) Date of publication of application: **09.07.2008**
(21) Application number: 06026921.4
(22) Date of filing: 27.12.2006
(51) Int. Cl.: B32B 11/00, E04D 5/12

(54) **Roofing membrane with enhanced sealability and method to make the same**

(71) Applicant: IKO Europe, 2020 Antwerpen (BE)
(72) Inventor: Coninx, Freddy, 2490 Balen (BE); Bergè, Bert, 3300 Tienen (BE)
(74) Representative: Bird, William Edward

(57) **Abstract**

A roofing membrane and a method of manufacturing the same is described whereby the membrane has a first exposed surface, a first side lap extending longitudinally on the first exposed surface, a first end lap extending transversely on the first exposed surface, a second exposed surface, exposed in a direction opposed to the first exposed surface, a second side lap longitudinally extending on the second exposed surface at the opposite side of the first side lap, a first coating of adhesive on the first side lap, and a second coating of adhesive on the first end lap. The roofing membrane further comprises a third coating of adhesive on the second side lap. The adhesive is preferably a pressure sensitive adhesive.

## Description

### FIELD OF THE INVENTION

The present invention is broadly concerned with an improved bituminous roofing membrane adapted for the waterproofing and sealing of substrate structures such as building or roofing structures and to method for preparing the same. In particular, the present invention relates to roofing membranes that can be sealed to one another by simply applying pressure to overlap zones.

### BACKGROUND OF THE INVENTION

In applications in which more than one roofing membrane of bituminous composition are applied to a roof deck, adjacent roofing membranes are traditionally bonded together by using gas burners to fuse the bituminous layers in overlap zones. These overlap zones are called end laps (width wise) and side laps (lengthwise). To avoid the so-called torch-on technique in which a naked flame must be used on top of roofs and sometimes in difficult circumstances, self-adhesive bituminous membranes have been developed. These membranes are generally made using a dual compound technology, i.e. having an upper layer comprising a modified bituminous compound and a lower layer comprising a self-adhesive compound. These self-adhesive membranes have important disadvantages such as a limited adhesive strength and a poor water tightness at the lap joints. The adhesive strength is especially limited at low temperatures.

There is therefore a need in the art for improved roofing membranes that can be overlapped in a strong, watertight, easy and safe fashion.

### SUMMARY OF THE INVENTION

An object of the present invention is to provide an improved roofing membrane and method to make the same. An advantage of the present invention is that it permits to overlap roofing membranes *in situ* by using only a moderate pressure on the overlap section, without necessarily using external heat sources. Broadly speaking, the invention is based on the unexpected finding that coatings of adhesive strategically applied on chosen area situated on both sides of a roofing membrane confers to it a safer applicability while simultaneously assuring excellent binding and water tightness.

In a first embodiment, the present invention relates to a roofing membrane having sides and ends comprising :
- a first exposed surface,
- a first side lap extending longitudinally on the first exposed surface,
- a first end lap extending transversely on the first exposed surface,
- a second exposed surface, exposed in a direction opposed to the first exposed surface,
- a second side lap extending longitudinally on the second exposed surface at the opposite side of the first side lap,
- a first coating of adhesive on the first side lap, and
- a second coating of adhesive on the first end lap,
characterised in that the roofing membrane further comprises a third coating of adhesive on the second side lap.

This is advantageous because it permits the formation of a particularly strong and watertight overlap between the first side lap of a first roofing membrane and the second side lap of a second roofing membrane.

As an additional feature, the adhesive may be a pressure sensitive adhesive. This is advantageous because it permits to form a particularly strong and watertight overlap between the first side lap of a first roofing membrane and the second side lap of a second roofing membrane without the use of any externally applied heat.

The adhesive is typically not a bituminous material.

As an additional feature, the first exposed surface may belong to a first bituminous layer and the second exposed surface may belong to a second bituminous layer. This is advantageous because it permits the use of two different bituminous layers and therefore to independently adapt each bituminous layer in function of the position that this layer will occupy once placed on site.

As an additional feature, a carrier sheet may be situated between the first bituminous layer and the second bituminous layer. This is advantageous because it prevents or reduces intermixing of the first bituminous layer and the second bituminous layer and it serves as a support during the production and during laying.

As an additional feature, the roofing membrane may further comprise:
(i) a second end lap transversely extending on the second exposed surface at the opposite side of the first end lap, and
(ii) a fourth coating of pressure sensitive adhesive on the second end lap.

This is advantageous because it permits formation of a particularly strong and watertight overlap between the first end lap of a first roofing membrane and the second end lap of a second roofing membrane.

As an additional feature, each of the coatings of adhesive may interpenetrate the bituminous layer on which they are coated. This improves the adhesion between the coatings of adhesive and the bituminous layer on which they are coated.

As an additional feature, the first bituminous layer may comprise a modified bituminous material. Preferably, the modified bituminous material may be modified with a modifier selected from the group consisting of: Atactic PolyPropylene (APP), Amorphous Poly Apha Olefin (APAO), Styrene-Butadiene-Styrene (SBS), Styrene-Ethylene-Butadiene-Styrene (SEBS), Thermoplastic Olefin (TPO) or Thermoplastic Elastomer (TPE). This is advantageous because modified bituminous materials may have enhanced elasticity, flexibility at low temperature, heat resistance, UV-resistance and/or foot traffic resistance when compared to unmodified bituminous materials.

As an additional feature, the second bituminous layer may comprise a self-adhesive bituminous material. This is advantageous because it permits to improve and facilitate the adhesion of the bituminous layer on a roof or another substrate.

As an additional feature, at least one of the coatings of pressure sensitive adhesive may comprise a hot melt pressure sensitive adhesive. This is advantageous because the absence of solvent or water lowers the energy required to form the coating of adhesive and reduces the environmental problem associated with solvent-borne adhesives.

As an additional feature, at least one of the coatings of pressure sensitive adhesive may have a Brookfield viscosity at 150 °C comprises between 9000 and 13000 mPa.s, preferably between 10000 and 12000 mPa.s and a Brookfield viscosity at 175 °C comprises between 4000 and 5500 mPa.s, preferably between 4500 and 5000 mPa.s. This is advantageous because it permits to obtain coatings of pressure sensitive adhesives having the required tack in the useful temperature range.

As an additional feature, at least one of the coatings of pressure sensitive adhesive may be applied in an amount of 150 to 500 g/m², preferably 200 to 400 g/m² since it is in this range that the best compromise between cost and adhesion is achieved.

As an additional feature, at least one of the coating of adhesive may be covered with one or more release liners. This permits the adhesive to keep all its properties until they will be released by the withdrawal of the one or more release liners.

As an additional feature, the second exposed surface is covered with a release liner at least on the portion of the second exposed surface not having a coating of pressure sensitive adhesive present thereon. This is advantageous because it permits the second exposed surface to keep all its properties until they will be released by the withdrawal of the release liner.

As an additional feature, each coating of pressure sensitive adhesive may have a width of 3 to 15 cm, preferably between 5 and 10 cm since it is in this range that a good compromise between cost and adhesion is achieved.

As an additional feature, one or more surfacing agents are imbedded in the area of the first exposed surface outside the first side lap and the first end lap. Preferably, the one or more surfacing agents may be selected from granules, sand, talcum, thermoplastic film or fabric. This may impart better weathering resistance, high temperature resistance and/or skid resistance.

In another embodiment, the present invention relates to a method of manufacturing a roofing membrane comprising the steps of:
a) forming a bituminous mono- or multilayer comprising:
   - a first exposed surface,
   - a first side lap extending longitudinally on the first exposed surface, and
   - a first end lap extending transversely on the first exposed surface,
   - a second exposed surface, exposed in a direction opposed to the first exposed surface,
   - a second side lap extending longitudinally on the second exposed surface at the opposite side of the first side lap,
b) preparing an adhesive,
c) applying the prepared adhesive onto:
   - the first side lap and the first end lap of the first exposed surface, and
   - the second side lap of the second exposed surface.

As an additional feature, step (b) of the method of this embodiment may comprise softening the adhesive between 140°C and 175°C. This is advantageous because it is in this range that the best suited adhesive are processable.

The adhesive is preferably a pressure sensitive adhesive. As an additional feature, step (b) may comprise applying the adhesive onto a release liner. This has the twofold advantage of 1) enabling an easier application and pressing of the prepared adhesive on the laps and 2) permitting the adhesive to keep all its properties until they will be released just before use by the withdrawal of the one or more release liners.

As an additional feature, step (c) may comprise pressing the prepared adhesive onto the first side lap, the first end lap and the second side lap. This is advantageous because pressing the adhesive onto the laps permits the adhesive to interpenetrate with the bitumen material forming them. This improves the adhesion between the coatings of adhesive and the laps on which they are coated.

As an additional feature, the method of this embodiment may further comprise the step of applying one or more surfacing agents on the area of the first exposed surface outside the first side lap and the first end lap.
This may impart better weathering resistance, high temperature resistance and/or skid resistance to the roofing membrane.

### BRIEF DESCRIPTION OF THE DRAWINGS

Figure 1 shows a roofing membrane according to an embodiment of the present invention.
Figure 2 shows a roofing membrane according to an embodiment of the present invention.
Figure 3 shows an exploded view of a roofing membrane according to an embodiment of the present invention.

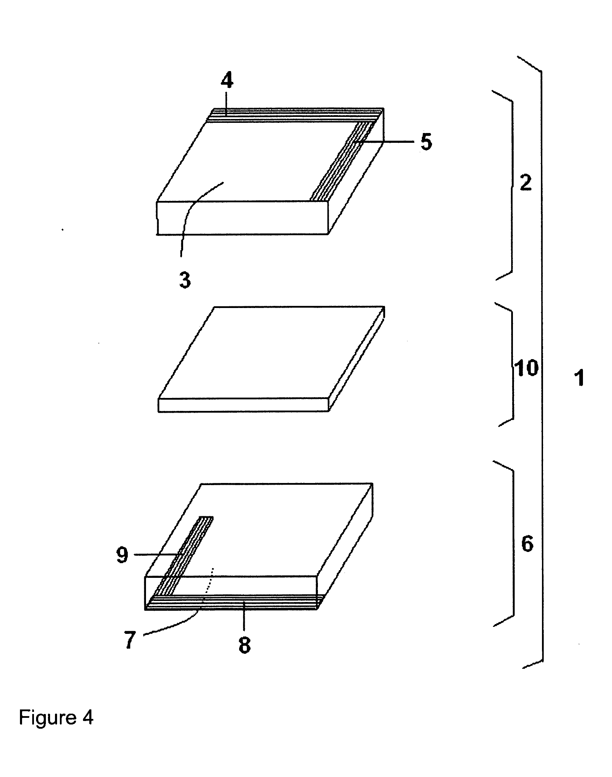

Figure 4 shows an exploded view of a roofing membrane according to an embodiment of the present invention.

### DETAILED DESCRIPTION OF THE ILLUSTRATIVE EMBODIMENTS

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes. Where the term « comprising » is used in the present description and/or claims, it does not exclude the presence of other elements or steps.

Where an indefinite article is used when referring to a singular noun e.g. « a », « an » or « the », this includes a plural of that noun unless something else is specifically stated.

Furthermore, the terms first, second, third and the like in the description and/or in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

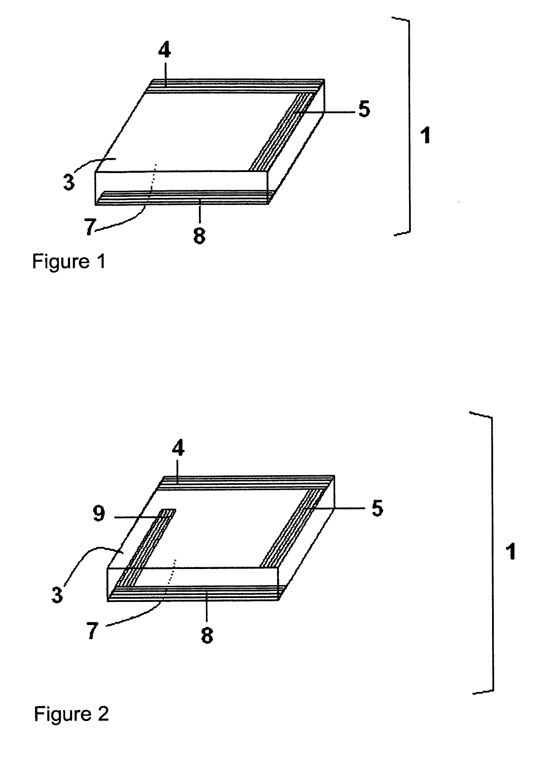

In a first embodiment (see figure 1), the present invention relates to a roofing membrane (1) having sides and ends.
The roofing membrane (1) of the present invention comprises:
- a first exposed surface (3),
- a first side lap (4) extending longitudinally on the first exposed surface (3),
- a first end lap (5) extending transversely on the first exposed surface (3),
- a second exposed surface (7), exposed in a direction opposed to the first exposed surface (3),
- a second side lap (8) extending longitudinally on the second exposed surface (7) at the opposite side of the first side lap (4),
- a first coating of adhesive on the first side lap (4),
- a second coating of adhesive on the first end lap (5), and
- a third coating of adhesive on the second side lap (8).

As depicted in Figure 2, the present invention may further comprise a second end lap (9) extending transversely on the second exposed surface (7) at the opposite side of the first end lap (5), and a fourth coating of adhesive on the second end lap (9).

The roofing membrane (1) can be of any nature and can, for instance, comprise a single bituminous layer or can be multi-layered.

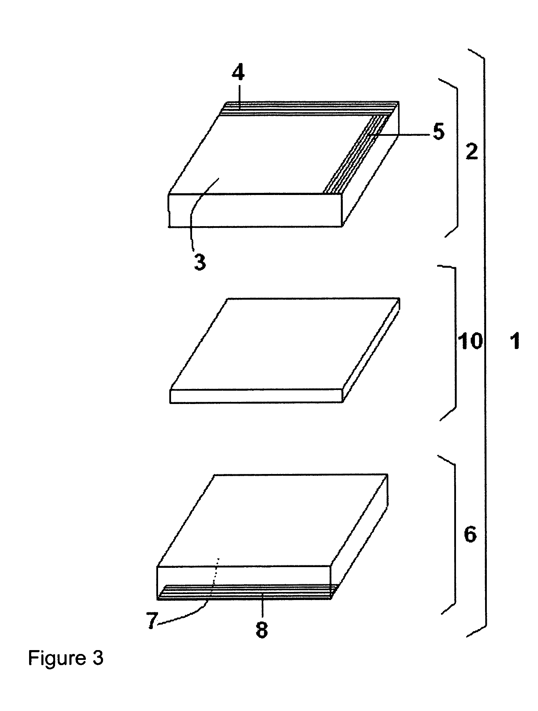

Referring now to Figure 3, in an embodiment of the present invention, the roofing membrane (1) may comprise a first bituminous layer (2) having the first exposed surface (3) and a second bituminous layer (6) having the second exposed surface (7) as well as preferably a carrier sheet (10) situated between the first bituminous layer (2) and the second bituminous layer (6). The first bituminous layer (2) can be any bituminous (i.e. asphaltic) layer but is preferably a modified bituminous layer. For instance, the first bituminous layer (2) may be modified with one or more polymers comprising but not limited to atactic polypropylene (APP), styrene butadiene styrene (SBS), styrene ethylene butadiene styrene (SEBS) or amorphous poly alpha olefins (APAO). The second bituminous layer (6) can be any bituminous layer but is preferably a self-adhesive bituminous layer. The self-adhesive bituminous layer has the property to be adhesive toward roof surfaces. Any self-adhesive bituminous layer can be used and the self adhesive bituminous layer may comprise for instance bitumen and SBS. For instance, the self adhesive bituminous layer may comprises 75-85% of bitumen 160/220, 5-10% of SBS1, 2-5% of SBS 2 and 10-15% of another resin, wherein bitumen 160/220 is a bitumen grade with a penetration value (as measured by the Needle Penetration Test as defined in EN 1426 (ASTM D5-73) at 25°C) of between 160 and 220 dmm, SBS 1 is a linear butadiene/styrene thermoplastic containing 70% of butadiene units and 30% of styrene units, SBS 2 is a linear butadiene/styrene thermoplastic containing 69% of butadiene units and 31% of styrene units and the other resin is an aromatic hydrocarbon resin such as but not limited to Novares T series.

The carrier sheet is typically a reinforcement support sheet made of fabric such as non-woven fibreglass or polyester mat, reinforced fibreglass or polyester mat, veiled scrim of various fibre combinations or laminated composite of two or more of the preceding support sheets.

The different coatings of adhesive applied on the laps referred to above can be either of the same nature or of a different nature from one another. Usually, it is more convenient to use an adhesive of the same nature for all coatings of adhesive referred to above.

Preferably, the adhesive is a pressure sensitive adhesive (PSA). The PSA can be either polyolefin-based, rubber-based or acrylic-based and may contain one or more tackifiers. The PSA can be applied from an organic solvent, an aqueous dispersion or a hot melt. The PSA may as well be radiation cured. Most preferably, a hot melt pressure sensitive adhesive (HMPSA) is used. HMPSA remains sticky after the adhesive has cooled down. When rubber-based, a typical HMPSA composition contains one or more natural or synthetic elastomers, tackified with a petroleum resin and/or other ingredients, such as plasticizers, that improve the tack of the adhesive. Examples of HMPSA include but are not limited to styrene-isoprene-styrene-based adhesive, ethylene-vinyl acetate-based adhesive, styrene-butadiene-styrene-based adhesive and ethylene-ethyl acrylate-based adhesives among others. Preferably, the adhesive has a Brookfield viscosity at 150 °C comprised between 9000 and 13000 mPa.s and a Brookfield viscosity at 175 °C comprised between 4000 and 5500 mPa.s. Most preferably, the adhesive has a Brookfield viscosity at 150 °C comprised between 10000 and 12000 mPa.s and a Brookfield viscosity at 175 °C comprised between 4500 and 5000 mPa.s Preferably, it is flexible at low temperature (down to -25°C) and it is not water sensible. Table 1 gives the physical properties of an example of HMPSA usable in accordance with an embodiment of the present invention.

**Table 1**

| *Property* | *Value* |
|---|---|
| Cold flexibility (°C) | -25 |
| Brookfield Viscosity (mPas) | 11000 (150°C) |
| | 4750(175°C) |
| Ring and Ball Softening Point (°C) | 90 |
| Application Temperature (°C) | 135-175 |

The adhesive is preferably applied in an amount of 150 to 500 g/m², preferably 200 to 400 g/m² on the laps either as a continuous coating (e.g. a homogeneous layer) or as a discontinuous coating (e.g. a series of strips). The width of each coating of adhesive is between 3 and 15 cm, preferably between 5 and 10 cm. Preferably, the coatings of adhesive interpenetrate the bituminous layers on which they are coated.

For stocking purpose, it is convenient to have the adhesive covered with one or more release liners such as but not limited to a polyester, a polyethylene or a polypropylene release liner, preferably a polyester release liner.

When the second bituminous layer (6) is a self-adhesive second bituminous layer (6), it is preferably covered with a release liner at least on the portion of the second exposed surface (7) not having a coating of adhesive present thereon. Preferably, one or more surfacing agents are imbedded in the area of the first exposed surface (3) outside the first side lap (4) and the first end lap (5). The surfacing agents may be selected from granules, sand, talcum, thermoplastic film or fabric among others. The roofing membrane of the present invention can be overlapped in a strong and watertight way without the use of any externally applied heat. After removal of the release liners, only a limited pressure has to be applied to join the membranes together. Table 2 shows the shear resistance at three different temperatures for three different systems: Overlapping of a self-adhesive layer with a self-adhesive layer (SA/SA), overlapping of a self adhesive layer and a hot melt pressure sensitive adhesive (SA/HMPSA) and overlapping of a hot melt pressure sensitive adhesive with a hot melt pressure sensitive adhesive (HMPSA/HMPSA).

**Table 2**

| | *SAlSA* | *SA*/*HMPSA* | *HMPSA*/*HMPSA* |
|---|---|---|---|
| Shear resistance after 24h at 8°C (N/5cm) | 681 | 819 | 1137 |
| Shear resistance after 24h at 25°C (N/5cm) | 1140 | 1178 | 1267 |
| Shear resistance after 24h at 60°C (N/5cm) | 1265 | 1215 | 1295 |

As it appears from Table 2, the overlapping of two laps each coated with HMPSA provides a markedly improved shear resistance to the assembly formed by this overlap. This is especially true at low temperatures.

In another embodiment, the present invention relates to a method of manufacturing a roofing membrane (1) comprising the steps of:
a) forming a bituminous mono- or multi-layer comprising:
   - a first exposed surface (3),
   - a first side lap (4) longitudinally extending on said first exposed surface (3), and
   - a first end lap (5) transversely extending on said first exposed surface (3),
   - a second exposed surface (7), exposed in a direction opposed to the first exposed surface (3),
   - a second side lap (8) longitudinally extending on said second exposed surface (7) at the opposite side of said first side lap (4),
b) preparing an adhesive,
c) applying said prepared adhesive onto:
   (i) said first side lap (4) and said first end lap (5) of said first exposed surface (3), and
   (ii) said second side lap (8) of said second exposed surface (7).

Preferably, the bituminous layer is an assembly of a first and a second bituminous layer (2 and 6). Such an assembly is well known in the art and is usually referred to as a "dual compound" modified bitumen composite. Any method of manufacture described in the art to form such a dual compound can be applied here. For instance, One or more reinforcement carrier sheets (10) can be unwound from a mat unwinding station and saturated with the first bituminous layer (2) (e.g. an APP modified bitumen compound) in a saturation tank.

Optionally, coating thickness can be controlled using calender rolls immediately after the saturated carrier sheet comes out of the saturation tank. At this level, compound from the back side of the carrier sheet (10) may be scraped off using a scraper in order to facilitate application of the second layer (6) (e.g. a self- adhesive compound) on the back side of the carrier sheet during a later stage in the manufacturing process. After the optional step of scraping off the compound from the back side of the carrier sheet, the adhesive coating is softened between 140 °C and 175 °C in a drum-melter and applied to the first side lap (4) and to the first end lap (5). There are different ways to apply the adhesive coatings. A first way consists in applying directly the adhesive coating to the first side lap (4) using a selvage adhesive applicator, which is followed immediately by application of a release liner (e.g. a siliconized polyester film tape) onto the first side lap (4) of the first bituminous layer (2) using a selvage film applicator. Then the adhesive coating is applied to the first end lap (5) using an end lap adhesive applicator, which is followed immediately by application of a release liner (e.g. a siliconized polyester tape) across the width of the first bituminous layer (2) using an end lap film applicator. Alternatively, the adhesive coating can be applied at the first end lap using an end lap adhesive applicator and at the first side lap (4) using a selvage adhesive applicator and immediately following the adhesive coating applications, the release films are applied to the corresponding sections using selvage film applicator and end lap film applicator, respectively. A further way to apply the adhesive coatings onto the laps consists in coating the adhesive first on a release liner. Afterwards, this combination adhesive/release liner is rolled and/or pressed onto the laps. Forming first a combination adhesive/release liner before to apply it to the laps has the advantage to ease and make more effective the application of pressure between the adhesive and the laps leading therefore to a better interpenetration of the adhesive and the bituminous material.

After the optional surfacing application process the bituminous layers (top and bottom) are applied. Following the application of the bituminous layers the adhesive coatings are applied on top- and bottom side lap and optionally on the end lap, for instance in one of the ways described here above. A release liner may be applied to the exposed surfaces. If granules are applied as surfacing agent, the roofing membrane is continued through the production line over granules press rollers in order to imbed the granules into the first exposed surface of the hot first bituminous layer. The bituminous layers undergo cooling by travelling on a chilled water bath and/or over cooling drums and typically are cooled to about 50 degrees Celsius.
Then the assembly travels through to a winder where it is cut to the required length and wound into rolls.

The invention is by no means limited to the above-described embodiments given as an example and represented in the accompanying drawings; on the contrary, the methods according to the invention can be performed in all sorts of variants while still remaining within the scope of the invention.

## Claims

1. A roofing membrane (1) having sides and ends comprising :
- a first exposed surface (3),
- a first side lap (4) longitudinally extending on said first exposed surface (3),
- a first end lap (5) transversely extending on said first exposed surface (3),
- a second exposed surface (7), exposed in a direction opposed to said first exposed surface (3),
- a second side lap (8) longitudinally extending on said second exposed surface (7) at the opposite side of said first side lap (4),
- a first coating of adhesive on said first side lap (4), and
- a second coating of adhesive on said first end lap (5),
**characterised in that** said roofing membrane (1) further comprises a third coating of adhesive on said second side lap (8).

2. A roofing membrane (1) according to claim 1, **characterised in that** said adhesive is a pressure sensitive adhesive.

3. A roofing membrane (1) according to claim 2, **characterised in that** said first exposed surface (3) belongs to a first bituminous layer (2) and said second exposed surface (7) belongs to a second bituminous layer (6).

4. A roofing membrane (1) according to claim 3, **characterised in that** it further comprises a carrier sheet (10) situated between said first bituminous layer (2) and said second bituminous layer (6).

5. A roofing membrane (1) according to any of claims 1 to 4, **characterised in that** it further comprises:
(i) a second end lap (9) transversely extending on said second exposed surface (7) at the opposite side of said first end lap (5), and
(ii) a fourth coating of pressure sensitive adhesive on said second end lap (9).

6. A roofing membrane (1) according to any of claims 1 to 5, **characterised in that** each of said coatings of adhesive interpenetrates the bituminous layer (2 or 6) on which they are coated.

7. A roofing membrane (1) according to any of claim 1 to 6, **characterised in that** said first bituminous layer (2) comprises a modified bituminous material.

8. A roofing membrane (1) according to claim 7, **characterised in that** said modified bituminous material is modified with a modifier selected from the group consisting of Atactic PolyPropylene (APP), Amorphous Poly Apha Olefin (APAO), Styrene-Butadiene-Styrene (SBS), Styrene-Ethylen-Butadiene-Styrene (SEBS), Thermoplastic Olefin (TPO) or Thermoplastic Elastomer (TPE).

9. A roofing membrane (1) according to any of claims 3 to 8, **characterised in that** said second bituminous layer (6) comprises a self-adhesive bituminous material.

10. A roofing membrane (1) according to any of claims 2 to 9, **characterised in that** at least one of said coatings of pressure sensitive adhesive comprises a hot melt pressure sensitive adhesive.

11. A roofing membrane (1) according to any preceding claim, **characterised in that** at least one of said coatings of adhesive has a Brookfield viscosity at 150 °C comprised between 9000 and 13000 mPa.s and a Brookfield viscosity at 175 °C comprised between 4000 and 5500 mPa.s.

12. A roofing membrane (1) according to any preceding claim, **characterised in that** at least one of said coatings of adhesive is applied in an amount of 150 to 500 g/m².

13. A roofing membrane (1) according to any preceding claim, **characterised in that** at least one of said coating of adhesive is covered with one or more release liners.

14. A roofing membrane (1) according to any preceding claim, **characterised in that** said second exposed surface (7) is covered with a release liner at least on the portion of said second exposed surface (7) not having a coating of adhesive present thereon.

15. A roofing membrane (1) according to any preceding claim, **characterised in that** each of said coatings of adhesive have a width of 3 to 15 cm.

16. A roofing membrane (1) according to any previous claim, **characterised in that** one or more surfacing agents are imbedded in the area of said first exposed surface (3) outside said first side lap (4) and said first end lap (5).

17. A method of manufacturing a roofing membrane (1) comprising the steps of:
a) forming a bituminous layer comprising:
- a first exposed surface (3),
- a first side lap (4) longitudinally extending on said first exposed surface (3), and
- a first end lap (5) transversely extending on said first exposed surface (3),
- a second exposed surface (7), exposed in a direction opposed to the first exposed surface (3),
- a second side lap (8) longitudinally extending on said second exposed surface (7) at the opposite side of said first side lap (4),
b) preparing an adhesive,
c) applying said prepared adhesive onto:
- said first side lap (4) and said first end lap (5) of said first exposed surface (3), and
- said second side lap (8) of said second exposed surface (7).

18. The method of claim 17, **characterised in that** step (b) comprises softening said adhesive between 140°C and 175°C.

19. The method of claim 17 or 18, **characterised in that** step (b) comprises applying said adhesive onto a release liner.

20. The method of any of claims 17 to 19, **characterised in that** step (c) comprises pressing said prepared adhesive onto said first side lap (4), said first end lap (5) and said second side lap (8).

21. The method of any of claims 17 to 20, **characterised in that** said method further comprises the step of applying one or more surfacing agents on the area of said first exposed surface (3) outside said first side lap (4) and said first end lap (5).
